# EUROPEAN PATENT APPLICATION

(11) **EP 3 964 997 A1**
(43) Date of publication of application: **09.03.2022**
(21) Application number: 21190427.1
(22) Date of filing: 09.08.2021
(51) Int. Cl.: G06F 30/15, G06F 30/27

(54) **BAYESIAN NETWORK ANALYSIS OF SAFETY OF INTENDED FUNCTIONALITY OF SYSTEM DESIGNS**

(30) Priority: 03.09.2020 US 202017011384
(71) Applicant: Aptiv Technologies Limited, St. Michael (BB)
(72) Inventor: DeLaus, Michael, Boston, 02111 (US); Taft, Gordon Douglas Herman, 40227 Düsseldorf (DE); Dhavaleswarapu, Dheeraj, 42105 Wuppertal (DE); Hao, Chenghui, Cambridge, 02142 (US); Solmaz, Rasit Mert, 50733 Köln (DE)
(74) Representative: Manitz Finsterwald Patent- und Rechtsanwaltspartnerschaft mbB

(57) **Abstract**

This document describes analysis of a functional architecture under the Safety of Intended Functionality of System (SOTIF) standard through construction of Bayesian networks that model performance of the functional architecture. The Bayesian networks model performance of the functional architecture given triggering conditions that result in at least some possible hazards. Constructed based on estimated probability data or probability data collected, the Bayesian networks quantify uncertainty of the system performance using conditional probabilities representing causal relationships between modules or components of the functional architecture. This allows inference and other probabilistic algorithms to be performed by the Bayesian network to calculate an overall hazard-rate of the functional architecture as well as identifying weaknesses in the functional architecture. A hazard-rate-of-occurrence can be estimated for many different system configurations and use cases to prove whether SOTIF is achieved.

## Description

### BACKGROUND

An original equipment manufacturer (OEM) proves that a vehicle can safely rely on its algorithms to generate decisions without failure for a minimum distance or time driven (*e.g.,* one failure per billions of hours driven) in order to obtain validation in Safety Of The Intended Functionality (SOTIF) for an autonomous driving system (see ISO/PAS 21448:2019 "Road vehicles - Safety of the intended functionality"). Validation of the SOTIF is often infeasible through road testing. Existing simulation and analysis techniques fall short of quantifying a system's functional weaknesses under less than ideal operating conditions, which is required by the SOTIF standard.

### SUMMARY

This document describes Bayesian network analysis of safety of intended functionality (SOTIF) of system designs. A Bayesian network is used to model a system for SOTIF analysis by quantifying uncertainty inherent in the system's performance. A Bayesian network is recommended to be used to model the causal relationship between failure events occurring in each block in which uncertainty of such causal relationships are quantified using conditional probabilities. This type of model enables the use of probabilistic inference to quantitatively verify that the system design meets a SOTIF target hazard rate, or to guide design improvements with quantitative data until the improved design meets the SOTIF target hazard rate. These improvements influence a system's design and are verifiable through analyzing changes these improvements make to the system's SOTIF hazard rate.

In one example, a method includes calculating nominal requirements for a functional architecture of an automotive system in a particular use case, determining, based on the nominal requirements, possible violations to the nominal requirements, and determining a respective probability of occurrence for the possible violations during the particular use case. The method further includes constructing a Bayesian network including multiple nodes with one or more directed edges conveying information between two nodes, each of the multiple nodes having a conditional probability derived from the respective probabilities of occurrence for the possible violations, and performing inference with the Bayesian network to estimate a hazard-rate-of-occurrence and deviation in the hazard-rate-of-occurrence for the functional architecture in the particular use case.

In another example, a system includes a processor configured to calculate, based on safety goals for a functional architecture of an automotive system, nominal requirements for the functional architecture given a particular use case, qualitatively determine, based on the nominal requirements, possible violations to the nominal requirements, and determine a respective probability of occurrence for at least some of the possible violations. The processor is further configured to construct a Bayesian network including multiple nodes with one or more directed edges, each of the multiple nodes having a conditional probability table derived from the respective probabilities of occurrence determined for the at least some of the possible violations, resolve each conditional probability table in the Bayesian network by estimating any unknown probabilities in the conditional probability table, and perform inference with the Bayesian network to estimate a hazard-rate-of-occurrence and deviation in the hazard-rate-of-occurrence for the functional architecture in the particular use case.

In another example, a system includes means for defining, for a functional architecture of an automotive system, a target hazard-rate-of-occurrence that satisfies a safety-of-the-intended-function standard for a particular use case, means for determining each triggering condition that can occur during the particular use case and a respective probability of occurrence for each triggering condition that can occur during the particular use case, means for identifying, based on each triggering condition that can occur during the particular use case, possible hazards to the functional architecture during the particular use case, and means for identifying, based on the possible hazards, safety goals for the functional architecture. The system further includes means for calculating based on the identified safety goals, nominal requirements for the functional architecture, means for qualitatively determining, based on the nominal requirements, possible violations to the nominal requirements; means for determining a respective probability of occurrence for all but at least one possible violation from the possible violations, and means for constructing a Bayesian network including multiple nodes with one or more directed edges conveying information between parent and child nodes, each of the multiple nodes having a conditional probability table including the respective probabilities of occurrence and respective deviations in the respective probabilities of occurrence for all but the at least one possible violation. The system further includes means for resolving each respective conditional probability table in the Bayesian network using a parameter learning algorithm to determine a respective probability of occurrence for the at least one possible violation, means for performing inference with the Bayesian network to estimate a hazard-rate-of-occurrence and deviation in the probability of occurrence for the functional architecture, means for determining changes to the functional architecture that cause the hazard-rate-of-occurrence and the deviation in the probability of occurrence to satisfy the target current hazard-rate-of-occurrence.

This document also describes means for performing the above-summarized method and other methods set forth herein, in addition to describing methods performed by the above-summarized systems and methods performed by other systems set forth herein.

This summary introduces simplified concepts of Bayesian network analysis of the SOTIF of system designs, which are further described below in the Detailed Description and Drawings. This summary is not intended to identify essential features of the claimed subject matter, nor is it intended for use in determining the scope of the claimed subject matter.

### BRIEF DESCRIPTION OF THE DRAWINGS

The details of one or more aspects of Bayesian network analysis of SOTIF of system designs are described in this document with reference to the following figures. The same numbers are often used throughout the drawings to reference like features and components.
Fig. 1 illustrates an example environment in which a system is configured to analyze SOTIF of a functional architecture of an automotive system.
Fig. 2 illustrates an example of a SOTIF module shown in Fig. 1.
Fig. 3 illustrates an example method for inferring a hazard-rate-of-occurrence of the functional architecture of the automotive system in Fig. 1.
Fig. 4 illustrates another example method for inferring a hazard-rate-of-occurrence of the functional architecture of the automotive system in Fig. 1.
Fig. 5 illustrates various triggering conditions and their corresponding occurrence rates for the functional architecture of the automotive system in Fig. 1.
Fig. 6 illustrates part of an example Bayesian network constructed for the functional architecture of the automotive system in Fig. 1.

### DETAILED DESCRIPTION

### OVERVIEW

For automotive systems, validation of the Safety of the Intended Functionality (SOTIF) of a system (see ISO/PAS 21448:2019 "Road vehicles - Safety of the intended functionality") requires proof that a vehicle can rely on that system to function without failure for a specified amount of time. SOTIF is distinct from automotive Functional Safety Analysis (FUSA), which deals with total component failure and is mainly concerned with hardware reliability. In contrast to FUSA, SOTIF works to quantify a weakness in system functionality while operating under less than ideal internal and external conditions, whether with or without fail. Definitionally speaking, FUSA cannot be applied to verify whether a vehicle architecture meets a SOTIF metric; SOTIF requires a different type of analysis.

SOTIF considers how a component of a vehicle's functional architecture performs including when deviating from or violating normal operating behavior accounting for uncertainty, whereas FUSA only considers how the component will fail. For example, FUSA of a sensor may define whether the sensor does or does not detect an object. SOTIF of the sensor, on the other hand, may define whether the sensor does or does not detect the object including possibilities in-between (*e.g.*, detecting the object but detecting the object at an incorrect range). Each possibility in-between can impact a system's functionality differently; FUSA is not able to account for these in-between-possibilities.

There can be degrees of severity for a given violation, which also cannot be captured by FUSA but is required for SOTIF. Continuing with the previous example, the sensor may have varying levels of range incorrectness (*e.g*., detecting an object with small range error versus detecting the object with a large range error), which can impact a system's functionality differently (*e.g*., one meter range error is less likely to cause a hazard than a ten-meter range error). Most FUSA considers two potential outcomes, failure or no failure, which is not an adequate assumption for SOTIF. External factors (referred to herein as "triggering conditions") can influence the functionality of a system. External factors may be ignored in FUSA; however, for proving SOTIF, these triggering conditions are often a main cause of a malfunction and are therefore, important to consider in a functional analysis.

Violations can be caused by "triggering conditions"; violations can likewise occur due to uncertainty and due to inherent weakness of a system (e.g., weakness in software); this can also cause performance deviations even without external triggering condition). In the examples below, external "triggering conditions" are considered as well as the inherent weakness in the system that could result in violations, even in the absence of external triggering conditions. Internal factors (*e.g.,* in the absence of triggering conditions) can likewise influence the functionality of a system and are, therefore also worth considering. Finally, SOTIF may require evidence that performance requirements for components of a system are met. Without knowledge of how triggering conditions may affect performance of the components, SOTIF cannot deduce a potential weakness, which may be important for design mitigation.

Advanced work applying Bayesian networks to FUSA has been performed; however these fault-tree based Bayesian networks are derived from fault trees for performing FUSA and, therefore, inherit limitations of FUSA, which is dissimilar to SOTIF. These fault-tree based Bayesian networks can only represent two operating conditions (*e.g*., failure or no failure) rather than also considering in-between possibilities. A fault-tree based Bayesian network may represent dependencies with logical AND gates, as well as, logical OR gates. Although this works for hardware failures, which is what a fault-tree based network is designed for, absolute logic does not account for violations in software relative to expected behavior, such as different outcomes from parent software events that influence child event behaviors in unexpected ways. Discrete logic of fault-tree based Bayesian networks cannot account for unexpected behaviors, such as system failures that can occur despite having received correct inputs or system successes that may happen even though the inputs were at least partially in error.

Fault-tree based Bayesian networks may not analyze performance under multiple scenarios or operating conditions. To perform SOTIF analysis, hazard rates and system performance in specific use cases are analyzed. Without an option to specify operating conditions for SOTIF analysis, a fault-tree based Bayesian network cannot accurately estimate violations from nominal system performance. Operating conditions and a system's response to changes in the operating conditions are too simplified in fault-tree based Bayesian networks to be used for SOTIF analysis. The operating internal and external conditions modeled may only cover a fraction of scenarios needed to verify the SOTIF of a system. Verifying the SOTIF requires a more realistic analysis of a system, which accounts for unexpected behaviors in the system and operating conditions including in absence of a hardware failure.

In contrast to these other approaches to system design, this document describes analysis of a functional architecture under the SOTIF standard through construction of Bayesian networks that model performance of the functional architecture. A Bayesian network is used to model a system for SOTIF analysis by quantifying uncertainty inherent in the system's performance. ABayesian network is recommended to be used to model the causal relationship between failure events occurring in each block in which uncertainty of such causal relationships are quantified using conditional probabilities. This model enables the use of probabilistic inference to quantitatively verify that the system design meets a SOTIF target hazard rate, or to guide design improvements with quantitative data until the improved design meets the SOTIF target hazard rate. These improvements influence a system's design and are verifiable through analyzing changes these improvements make to the system's SOTIF hazard rate.

The Bayesian networks model relationships between blocks of the functional architecture and the triggering conditions that sometimes can result in possible hazards, as well as modeling relationships between the blocks and any hazard caused from uncertainty. The underlying cause of some malfunctions can be uncertain or undefined and this "uncertainty" in a system can be treated similarly as a triggering condition. The existence or absence of both internal and external factors and triggering conditions alike can influence functionality of a system. Each functional block is modeled in the Bayesian network to have more than two states rather than only a binary state, like with fault-tree based Bayesian networks; this allows the described Bayesian networks to more-accurately model real-life performance of the functional architecture. Constructed based on probability data collected for some violations of or uncertainty in the functional architecture and further based on probability data estimated for others, the Bayesian networks perform inference to compute a hazard-rate-of-occurrence. Requirement-driven ways-to-improve performance can be determined by setting the hazard-rate-of-occurrence to a desired value (*e.g*., 10⁻⁹) and, through inference, investigating how, through changing performance assumptions made for different components of the functional architecture 104, the functional architecture 104 can be designed to achieve the desired hazard rate value. The hazard-rate-of-occurrence can be predicted for many different system configurations and use cases to prove whether the SOTIF standard will be achieved.

As used herein, the term "assumption" is referring to a performance attribute of a functional architecture or block thereof; it is assumed that a system's design will be updated to match the assumptions that are used during estimation with the Bayesian networks, so that an updated system or updated design would actually achieve a target hazard-rate-of-occurrence, as predicted by the models. The phrase "change of assumption" implies a requirement change for an architecture in order to meet a target hazard rate. To be more specific, this "requirement change" is the performance requirement change to at least one block in a functional architecture.

### EXAMPLE COMPUTING ENVIRONMENT

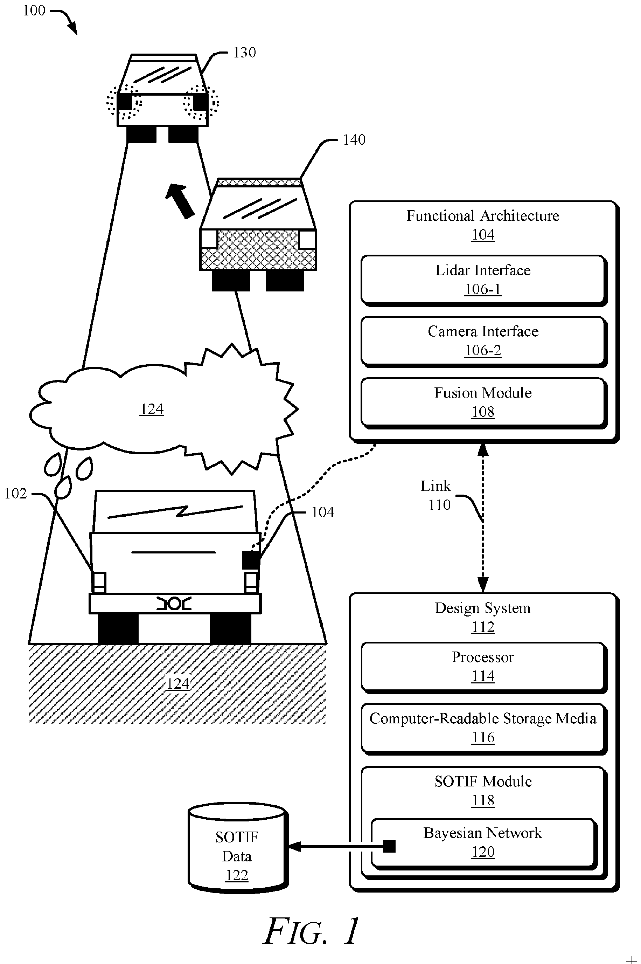

Fig. 1 illustrates an example environment 100 in which a system is configured to analyze SOTIF of a functional architecture of an automotive system. The environment 100 includes a vehicle 102 or a model of a vehicle, such as an autonomous, semi-autonomous, or operator (driven automobile *e.g.,* a machine, a person), equipped with vehicle-based systems that together form a functional architecture 104, which operates under the conditions 124. The conditions 124 can include road conditions (*e.g.,* dry, wet, uneven), weather conditions (*e.g.,* light or heavy rain, snow, fog) or other environmental of system factors (*e.g.*, geographic location, vehicle speed, vehicle direction, time of day, time of year) that may impact a hazard-rate-of-occurrence for SOTIF.

The functional architecture 104 includes a fusion module 108. The fusion module 108 combines data obtained from a lidar interface 106-1 to a lidar sensor of the vehicle 102 with data obtained from a camera interface 106-2 to a camera of the vehicle 102 to detect objects in proximity to the vehicle 102. For example, ahead of the vehicle 102 is a stopped vehicle 130 (*e.g.,* parked at a traffic light) and a third vehicle 140 cutting in-front of the vehicle 102 in-between it and the stopped vehicle 130. The fusion module 108 can detect an object, falsely detect an object, falsely detect no object, or detect no object. The fusion module 108 may detect an object but determine an inaccurate position or range to the object. The vehicle 102 can have many other functional blocks as part of the functional architecture 104 beyond just the fusion module 108, the lidar interface 106-1, or the camera interface 106-2. The functional architecture 104 can be at any level of detail, such as a high-level or low-level. For instance, a "block" of the functional architecture 104 could represent an entire module, such as a lidar tracker, or it could be a sub-module within the lidar tracker (*e.g.,* a point-cloud-clustering element). This flexibility allows the techniques to perform SOTIF analysis that adapts to the detail in the data used to construct Bayesian networks, as described later on.

A design system 112 of the environment 100 enables analysis of the functional architecture 104 under the SOTIF standard through construction of Bayesian networks. The design system 112 may share a link 110 with the functional architecture 104 over which information (*e.g*., data) about the functional architecture 104 exchanged.

The design system 112 includes a processor 114, a computer-readable storage media 116, and a SOTIF module 118. The SOTIF module 118 may be implemented at least partially in hardware. The SOTIF module 118 can include software, for example, instructions stored on the computer-readable storage media 116 and executed by the processor 114. The SOTIF module 118 constructs a series of Bayesian networks, including the Bayesian network 120. The Bayesian network 120 constructed by the SOTIF module 118 is configured to determine a hazard-rate-of-occurrence for the functional architecture 104 for a different use case. In the example of Fig. 1, the Bayesian network 120 is constructed for the use case involving the stopped vehicle 130 and the third vehicle 140.

The SOTIF module 118 outputs the SOTIF data 122. The SOTIF data 122 includes an indication of the hazard-rate-of-occurrence for the functional architecture 104. For example, a probability, a floating-point value, or other data indicative of long-term performance of the functional architecture 104 with or without a deviation associated with the probability value. Based on the SOTIF data 122, assumptions about the performance of the functional architecture 104 can be changed to (*e.g.,* the fusion module 108, the lidar interface 106-1, the camera interface 106-2) improve the hazard-rate-of-occurrence. For example, a user (*e.g.,* a design engineer) may provide inputs to a user interface of the design system 112 that cause the SOTIF module 118 to alter assumptions (*e.g*., a conditional probability table) made by the Bayesian network 120 with regard to the behavior of the functional module 104.

The Bayesian network 120 may represent part of the functional architecture 104 with a node having a conditional probability table representing probabilities of violations. The conditional probability table may indicate the node's possible operating states and a probability of ending up in each possible operating state. If a design of the functional architecture 104 can be improved, the Bayesian network 120 can be altered to account for improvements in performance to the functional architecture 104, for example, through lowering a probability for one or more hazardous states in the conditional probability table where a block of the functional architecture 104 fails or a violation occurs, or through raising the probability for one or more non-hazardous states in the conditional probability table where a block of the functional architecture 104 regularly performs without a violation or failure or such a violation or failure occurs less frequently.

The Bayesian network 120, through inference, can determine whether changes made to improve performance will have an intended impact on the hazard-rate-of-occurrence. The hazard-rate-of-occurrence can be easily recomputed by performing further inference with the Bayesian network 120, after modifications to its underlying assumptions (*e.g*., probabilities of occurrences for violations) are made, which account for the functional architecture's performance improvements. These underlying assumptions or respective probabilities of occurrence are based on, or influenced by, respective probabilities of occurrences or outcomes of parent nodes. For example, a lidar functional node has not just one, but multiple probabilities of occurrence for each possible set of triggering conditions or events (*e.g*., rain, snow, fog) tied to that parent node. In this document, a probability of occurrence is a probability of a violation happening during a particular use case. The Bayesian network 120 models these relationships and dependencies within the functional architecture 104 to infer a hazard-rate-of-occurrence for the functional architecture 104, for a specific use case.

By definition, the Bayesian network 120 is a directed acyclic graph. Each node of the Bayesian network 120 corresponds to a different block in the functional architecture 104. Each directed edge between two nodes in the Bayesian network 120 correspond to a conditional dependency between two functional blocks. Each child block is connected to at least one parent block; the child block has a respective probability of ending up in multiple different states due to violations or uncertainty, including a respective probability of failing, which may occur on its own or occur dependent on an outcome or a condition of one or more of its parent blocks. Each functional block can represent varying levels of abstraction; meaning a block may represent a lidar in one example and in another example, various subcomponents or modules of the lidar may be broken out into lidar clustering, lidar classification, foreground extraction, and the like.

For example, the Bayesian network 120 may include a node corresponding to the fusion module 108. This node may be a child to a first parent node corresponding to the lidar interface 106-1 and also a child to a second parent node corresponding to the camera interface 106-2. A probability of the fusion module 108 failing is dependent on condition of either of the interfaces 106-1 and 106-2 failing or ending up in one of various states, just as a probability of a child node failing may be dependent on a condition of one or both of its parent nodes and their respective states.

Constructed based on probability data collected or estimated for each block of the functional architecture 104, the Bayesian network 120 can be used to identify areas of the functional architecture 104 where improvements to reliability can lead to a greater overall improvement in in the hazard-rate-of-occurrence, which leads to improvement in performance and safety of the functional architecture 104. In response to updating probability data of the functional architecture 104 to replicate a desired performance, the Bayesian network 120 can, through further inference, determine a new hazard-rate-of-occurrence for the functional architecture 104. The new hazard-rate-of-occurrence proves whether with the improvements to performance, the new design of the functional architecture 104 achieves a target hazard-rate-of-occurrence for a specific use case. Through inference or automated script, the Bayesian network 120 can be rerun to test out multiple sets of performance requirements where each Bayesian network 120 is associated with a different set of performance requirements compared to each other Bayesian network 120, all of which would meet the target hazard rate. This gives a system designer flexibility in case one module or component of the functional architecture 104 cannot meet the performance requirements and then then we have options to allow them to meet a slightly lower performance requirement while increasing other performance requirements to still meet the target hazard rate

Multiple Bayesian networks like the Bayesian network 120 can be constructed by the SOTIF module 118, each being produced for a different use case. Through successive or parallel inferences run with the multiple Bayesian networks, a hazard rate of occurrence for the functional architecture 104 can be determined for each of the different use cases to prove, overall, whether the functional architecture 104 achieves a target hazard-rate-of-occurrence across the multiple different use cases.

### EXAMPLE SOTIF MODULE ARCHITECTURE

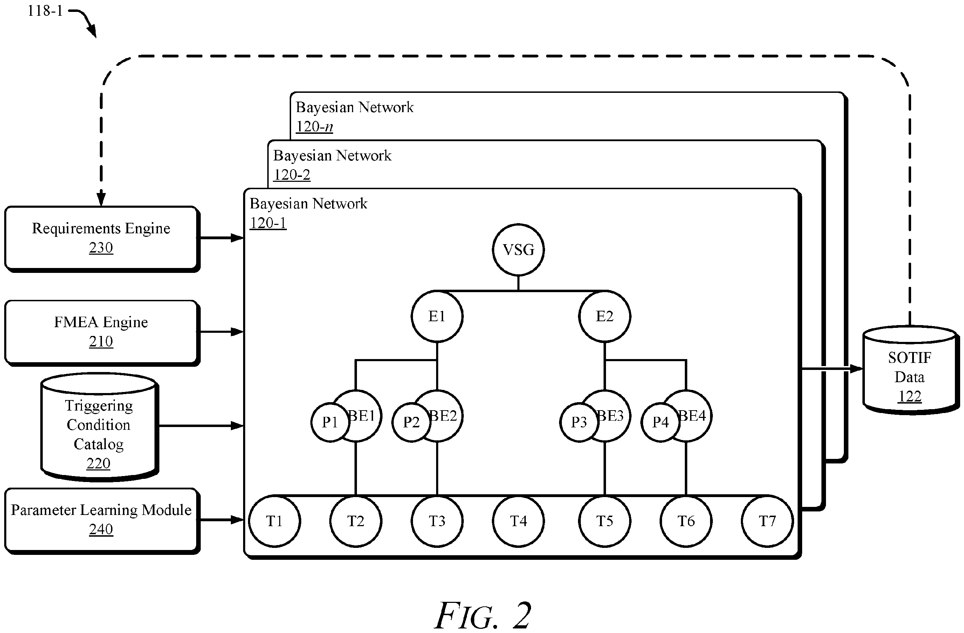

Fig. 2 illustrates a SOTIF module 118-1 as one example of the SOTIF module 118 shown in Fig. 1. The SOTIF module 118-1 includes Bayesian networks 120-1 through 120-*n*, where "*n*" is any integer.

Each of the Bayesian networks 120-1 through 120-1 is an example of the Bayesian network 120. The SOTIF module 118-1 constructs the Bayesian networks 120-1 through 120-n as a series of Bayesian networks, with each in the series determining a hazard-rate-of-occurrence for the functional architecture 104, for a particular use case. The Bayesian networks 120-1 through 120-*n* may be combined, each forming a subset of a common Bayesian network. Each part of the common Bayesian network (*e.g*., the Bayesian networks 120-1 through 120-*n*) may be selectively enabled, depending on a particular use case. That is, the Bayesian networks 120-1 and 120-n may be enabled during a first scenario involving two sensor interfaces, and only one of the Bayesian network 120-1 and 120-*n,* but not both may be enabled in a second scenario where only one of the two sensor interfaces is involved._In other examples, the Bayesian networks 120-1 through 120-*n* are similar or even the same except for their conditional probability tables, which reflect different values to indicate conditions of different scenarios or different performance improvements being tried to reduce a hazard-rate-of-occurrence. In some cases, individual Bayesian networks 120-1 through 120-*n* may be selectively disabled by zeroing-out conditional probability tables to nodes of a disabled portion of the Bayesian networks 120-1 through 120-*n*.Each of the Bayesian networks 120-1 through 120-*n* is associated with a different use case and uniquely configured to calculate a probability that a hazard, which violates a safety goal, will occur for that specific use case. For example, the Bayesian network 120-1 determines the SOTIF data 122 for a first use case of the SOTIF standard and the Bayesian network 120-2 determines the SOTIF data 122 for a different use case of the SOTIF standard. The first use case may be the use case shown in Fig. 1 with the third vehicle 140 moving between the vehicle 102 and the stopped vehicle 130. The second use case could be similar to the first, for example, the third vehicle 140 may move out from in-between the vehicle 102 and the stopped vehicle 130 and into an adjacent lane. By constructing and considering multiple Bayesian networks 120-1 through 120-*n*, an overall-hazard-rate-of-occurrence for the functional architecture 104 of the vehicle 102 can be determined for a wide range of use cases. Modifications to blocks in the function architecture 104 can be identified that may improve the hazard rate across the wide range of use cases.

To be clear, the SOTIF module 118-1 does not construct the Bayesian networks 120-1 through 120-*n* for performing functional safety analysis. There is a clear distinction between performing functional safety analysis as is done by other systems, including fault-tree based Bayesian networks, and analysis of the SOTIF performed with the Bayesian networks 120-1 through 120-*n*. Functional safety analysis is concerned with determining what occurs in response to "binary" hardware failures (*e.g.,* failure, no failure) with this failure effecting all use cases or scenarios equally. The SOTIF module 118-1 and the Bayesian networks 120-1 through 120-n determine performance degradation in response to algorithm weakness or failures (*e.g*., failure, partial failure, partial no failure, no failure) for a particular use case or scenario. The SOTIF module 118-1 analyzes the functional architecture 104 on a use-case level (*e.g.,* a particular road vehicle driving scenario) associated with the Bayesian networks 120-1 through 120-n. The SOTIF module 118-1 identifies performance weaknesses in the functional architecture 104 that depend on the probability of algorithmic failures occurring during those use cases.

Through "inference," the Bayesian networks 120-1 through 120-n compute a hazard-rate-of-occurrence of the functional architecture 104, each for a different use case. Consider the Bayesian network 120-1 in more detail. The Bayesian network 120-1 estimates a hazard-rate-of-occurrence for a specific use case associated with the Bayesian network 120-1, given an existing set of performance assumptions or measured performances of the functional architecture 104 that the Bayesian network 120-1 adheres to. Probabilistic relationships for in-between states of each functional block of the functional architecture 104 are represented by the Bayesian network 120-1; also represented is a contribution that each functional block of the functional architecture 104 has to cause a possible violation and ultimately, a hazardous event.

A failure mode and effects analysis (FMEA) engine 210 executes FMEA on the functional architecture 104 to establish within each of the Bayesian networks 120-1 through 120-*n*, a link between failure modes in which safety goals are violated (VSGs) and triggering conditions in the environment 100 that cause the VSGs. The FMEA engine 210 is concerned with all failures (*e.g*., including false-positive and false-negative states, range errors) as opposed to only being concerned with true failure modes as is the case with FMEA being performed under FUSA.

Triggering conditions T1 through T7 are shown in Fig. 2 and may be derivable from a triggering condition catalog 220, including statistical data (*e.g.*, probabilities and exposures). Triggering conditions relevant to each of a plurality of use cases are identified, which includes identifying critical use cases where hazards associated with the functional architecture 104 are known to occur. A triggering condition can represent an external signal such as a weather event. A triggering condition may also represent an internal event, such as system uncertainty, that can lead to a failure condition or failure event in a chain of events. For example, even in the absence of a glitch, software can be predicted to fail with some certainty although the source of the failure may be unknown.

The Bayesian networks 120-1 through 120-n are useful for modelling uncertainty in performance of the functional architecture, which is a benefit over fault-tree based analysis. For example, the SOTIF data 122 may include a hazard-rate-of-occurrence and deviation in the hazard-rate-of-occurrence when assumptions of the Bayesian networks 120-1 through 120-n are based on inaccurate data or data without a high confidence. In such a case, the SOTIF data 122 can report the hazard-rate-of-occurrence with the deviation, which represents a range in accuracy between two threshold values (*e.g*., a positive and negative percentage), which is helpful for designing a system.

The FMEA engine 210 provides each of the Bayesian networks 120-1 through 120-*n* with a chain of events, shown in Fig. 2 as events "E1" and "E2." Any event in the chain leads to the VSG. A VSG such as "failing to detect an object" may include "failing to detect the object with the lidar interface 106-1" and "failing to detect an object with the camera interface 106-2" as two possible events E1 and E2 leading to the VSG.

The FMEA engine 210 further produces a chain of basic events leading to each event E1 and E2 in the above chain of events for each of the Bayesian networks 120-1 through 120-*n*. The chain of basic events includes basic events "BE1", "BE2", "BE3", and "BE4." These basic events can be regular events or violation events, where a block of the functional architecture 104 deviates from normal behavior but does not fail, as well as true failure events where the functional architecture 104 fails. For example, the lidar interface 106-1 fails to detect in the event E1, depending on whether the basic event BE1 or the basic event BE2 occur. The basic event BE1 may occur when a line-of-sight to the object is obscured (*e.g*., when air contains moisture, when air contains heavy dust or sand). The basic event BE2 may happen if the object and a background have similar reflective properties making the object indistinguishable to the lidar interface 106-1. Similar to the lidar interface 106-1, the camera interface 106-2 fails to detect in the event E2, depending on whether the basic event BE3 or the basic event BE4 occur. The basic event BE3 may occur when a line-of-sight to the object is obscured, similar to the basic event BE1 and its effects on the lidar interface 106-1. The basic event BE4 may happen if the camera interface 106-2 fails to detect the object due to an oversaturation or an undersaturation of visible light (*e.g.,* in bright or dark situations).

Each of the basic events BE1 through BE4 has a respective probability of occurrence PI through P4. The probability of the event E1 occurring depends on the probability PI of the basic event BE1 occurring, the probability P2 of the basic event BE2 occurring, and so forth.

The probabilities PI through P4 are dependent at least in part on the triggering conditions T1 through T7. Any of the triggering conditions T1 through T7 can correspond to a road condition, a weather condition, or other variables in the environment 100 that effect performance of the functional architecture 104. As weather conditions, the triggering conditions T1 through T7 can include rain, fog, snow, hail, wind, dust, or other meteorological condition. These weather conditions may be of varying degree or intensity, for example, occurring under a dense fog or happening during a light rain. The triggering conditions T1 through T7 can include road conditions, for example, happening when the vehicle 102 is on pavement or occurring when the vehicle 102 is on concrete, dirt, gravel, sand, or another type of road surface. The road conditions may indicate whether the road surface is dry or wet. Other examples of the triggering conditions T1 through T8 include environmental or vehicle events (*e.g*., changes in geographic location, changes in altitude or elevation, changes in atmospheric pressure, changes in temperature, changes in time of day or year, changes in visibility including amount of daylight or nightlight, changes in speed,) that can impact a hazard-rate-of-occurrence for SOTIF.

Unlike a fault-tree based Bayesian network, the Bayesian networks 120-1 through 120-n can optionally represent functional blocks as having more than two states, which enables the Bayesian networks 120-1 through 120-*n* to account for different conditions that can cause varying effects to an overall hazard rate of the vehicle 102 or the functional architecture 104. For example, the fusion module 108 fails even if the lidar interface 106-1 detects an object if the lidar interface 106-1 fails to accurately determine a range to the object. The overall hazard rate of the system may be different depending on whether the lidar interface 106-1 accurately detects an object or even if detected, whether the lidar interface 106-1 accurately detects the object's range. If the lidar interface 106-1 detects the object but at a range that is incorrect by one meter, then the inaccurate range detection is not likely to affect overall performance of the fusion module 108. However, if the lidar interface 106-1 determines a range with an inaccuracy of ten meters or more, the inaccurate range detection likely does affect overall performance of the fusion module 108 and the functional architecture 104. The Bayesian networks 120-1 through 120-*n* allow each functional block (*e.g.,* the fusion module 108) to be assigned a unique probability of ending up in each one of the two or more states including in-between states such as that described above, where an object is detected but at an inaccurate range sufficient to cause a failure of the functional architecture 104.

The nominal requirements and the assumptions about performance of the functional architecture 104 are defined by a requirements engine 230. The nominal requirements are determined by considering the vehicle 102 to be operating in "ideal" conditions for each particular use case. Examples of nominal requirements include a minimum range to detect an object (*e.g.,* one hundred meters) depending on closing speed to the object. In addition, each functional block of the functional architecture 104 can have a unique set block-level assumptions that are conveyed through conditional probabilities of various events or states that the block can end up in, for example, that change depending on the use case. For example, a sensor can detect an object with an accuracy that depends on use case being modeled; the requirements engine 230 can tailor assumptions made in the Bayesian networks 120-1 through 120-*n*, which are about the sensor's performance from one use case where the field-of-view is partially obstructed to another use case where the field-of-view is unobstructed or completely blocked. The requirements engine 230 determines the assumptions of the blocks of the functional architecture 104 and inputs them as updated assumptions (*e.g*., updated conditional probability tables) to each of the Bayesian networks 120-1 through 120-*n* so that each accurately models behavior of the functional architecture 104. The requirements engine 230 may cause the SOTIF module 118-1 to generate the Bayesian networks 120-1 through 120-*n* to model the functional architecture 104 based on the nominal requirements and assumptions about performance.

The requirements engine 230 can determine a conditional probability table for each block of the functional architecture 104 and send each of the conditional probability tables to each of the Bayesian networks 120-1. A conditional probability table can include a list of possible outcomes at that node, and each possible outcome's probability of occurring in the particular use case. For example, see Tables 1 and 2, which represent, respectively, a general probability table for the event E1 and a version of the general probability table that is tailored to the fusion module 108. It should be understood that a table is one example of a data structure that can contain information about each node in a functional architecture, its potential operating states, and each operating state's probability of occurring in a particular use case. Other example data structures include: trees, graphs, lists, and the like.

**Table 1**

| **P(E1)** | **Outcome of BE1** | **Outcome of BE2** |
|---|---|---|
| 99.00% | T | T |
| 50.25% | T | F |
| 30.30% | T | T, but should not be T |
| 40.12% | T | F, but should not be F |
| . | F | T |
| . | F | F |
| . | F | T, but should not be T |
| . | F | F, but should not be F |
| . | T, but should not be T | T |
| . | T, but should not be T | F |
| . | T, but should not be T | T, but should not be T |
| . | T, but should not be T | F, but should not be F |
| . | F, but should not be F | T |
| . | F, but should not be F | F |
| 10.10% | F, but should not be F | T, but should not be T |
| 0.05% | F, but should not be F | F, but should not be F |

**Table 2**

| **P(VSG) - Fusion Module** | **Outcome of BE1 - Lidar Interface** | **Outcome of BE2 - Camera Interface** |
|---|---|---|
| 99.00% | Good detection | Good detection |
| 50.25% | Good detection | False negative |
| 30.30% | Good detection | False positive |
| 40.12% | Good detection | Detection and range error |
| . | False negative | Good detection |
| . | False negative | False negative |
| . | False negative | False positive |
| . | False negative | Detection and range error |
| . | False positive | Good detection |
| . | False positive | False negative |
| . | False positive | False positive |
| . | False positive | Detection and range error |
| . | Detection and range error | Good detection |
| . | Detection and range error | False negative |
| 10.10% | Detection and range error | False positive |
| 0.05% | Detection and range error | Detection and range error |

From Table 1, it can be seen that the event E1 is conditionally dependent on the basic event BE1 and basic event BE2, each of which has possible states and probabilities of ending up in each state. For example, the states of the basic event BE1 include: True, False, True but should not be True, and False but should not be False. Likewise, the basic event BE2 includes possible states: True, False, True but should not be True, and False but should not be False. Each of the possible states of the basic events BE1 and BE2 includes a probability P(state). The event E1 is conditionally dependent on the basic events BE1 and BE2 ending up in anyone of the above states.

The probability of the fusion module 108 having a "good detection" is indicated in the first four rows of the Table 2. These four rows, which follow the header row in the Table 2, correspond to the first four rows after the header row in the Table 1.

The SOTIF data 122 generated by the Bayesian networks 120-1 through 120-*n* can be used as feedback to improve the requirements engine 230. In other words, if the SOTIF data 122 indicates that a target hazard-rate-of-occurrence for the functional architecture 104 is not likely to be met, given existing assumptions about performance, the requirements engine 230 derives new performance assumptions so that specific parts of the functional architecture 104 may be redesigned to improve the hazard-rate-of-occurrence.

The Bayesian networks 120-1 through 120-*n* model performance of the functional architecture 104 by accounting for assumptions attributed to each block being modeled. The Bayesian networks 120-1 through 120-*n* estimate a probability of failure for the functional architecture 104, overall, including a deviation in the probability of failure; this proves whether, with the assumptions about performance being driven by the requirements engine 230, a desired target hazard rate can be achieved with the functional architecture 104 to satisfy the SOTIF standard. By changing the Bayesian networks 120-1 through 120-*n* based on the SOTIF data 122, the Bayesian networks 120-1 through 120-*n* can model how the functional architecture 104 performs

The requirements engine 230 may iteratively investigate different performance enhancements to one or more functional blocks of the functional architecture 104 that if made, will improve the hazard-rate-of-occurrence for the functional architecture 104, overall. For example, the functional architecture 104 can be modeled by the Bayesian networks 120-1 through 120-*n* to any degree of granularity. That is, each node or component of the functional architecture 104 can be broken down into as many or few discrete logical subcomponents, including down to a source code or machine code level of abstraction. This allows performance gains to be tried and tested at the functional architecture 104; through inference and iterative changes to the underlying assumptions (*e.g*., conditional probability tables, intra-nodal-relationships) of the Bayesian networks 120-1 through 120-*n*, theoretical hazard-rate-of-occurrences can be recomputed until the SOTIF data 122 and the target hazard-rate-of-occurrence of the SOTIF standard is achieved.

The Bayesian networks 120-1 through 120-*n* can predict whether a change driven by the requirements engine 230 will positively effect performance, overall, as well as a predicted amount of improvement, as measured in a quantifiable amount of reduction in the hazard-rate-of-occurrence. The requirements engine 230 may be configured to tune the assumptions that the Bayesian networks 120-1 through 120-*n* adhere to, until an overall performance of the functional architecture 104 is proven by the SOTIF data 122 to meet or exceed a target-hazard-rate-of-occurrence for one or more different use cases.

Each of the Bayesian networks 120-1 through 120-*n* outputs, as part of the SOTIF data 122, a probability of the functional architecture 104, and corresponding deviation in the probability, for violating a safety goal during a particular use case of the SOTIF standard. For example, the VSG for the Bayesian networks 120-1 through 120-n may be the fusion module 108 failing to detect an object or detecting an object but with a range error (*e.g*., detecting an object at an inaccurate range). To determine whether the functional architecture 104 satisfies the SOTIF for the vehicle 102, a hazard-rate-of-occurrence of the VSG is determined across multiple different use cases. The SOTIF module 118-1 includes each of the Bayesian networks 120-1 through 120-*n* for a different use case. Each of the Bayesian networks 120-1 through 120-*n* of the SOTIF module 118-1 analyze the functional architecture 104 differently, even if only slightly, from one use case to the next to accurately predict how the functional architecture will perform across all of the different use cases.

Particularly when juxtaposed with a fault-tree based approach, the Bayesian networks 120-1 through 120-*n* offer an additional benefit in that they enable the functional architecture 104 to be modeled with incomplete data. For instance, a parameter learning module 240 (*e.g.,* an expectation maximization algorithm) can estimate unknown probabilities of the functional blocks of a functional architecture of a system. The parameter learning module 240 may be tuned to determine the probability of the fusion module 108, the lidar interface 106-1, the camera interface 106-2, or the functional architecture 104 overall. Upon execution, the parameter learning module 240 eventually arrive at a most likely probability value for an unknown probability of the functional architecture 104. That is, an unknown probability of a block in the functional architecture 104 being in a particular state or in-between state can be estimated for the Bayesian networks 120-1 through 120-*n*, in a realistic way given the ability of the parameter learning module 240 to derive the unknown probability based on expert information obtained from other sources with knowledge of the functional architecture 104 and the components within. Parameter learning (*e.g.,* an EM algorithm) leverages measured data in addition to expert information. Measured information may be rare for some rare events (*e.g*., lidar in rain, with light fog, ice on road) or the amount of measurable data may be limited for these rare events; parameter learning can predict or estimate what the measured information (*e.g.*, probabilities) for these rare events could be based on the limited amount of measurable data available. Parameter learning can also introduce uncertainty into the Bayesian networks 120-1 through 120-*n*, which can be reported alongside the hazard-rate-of-occurrence.

### EXAMPLE METHODS

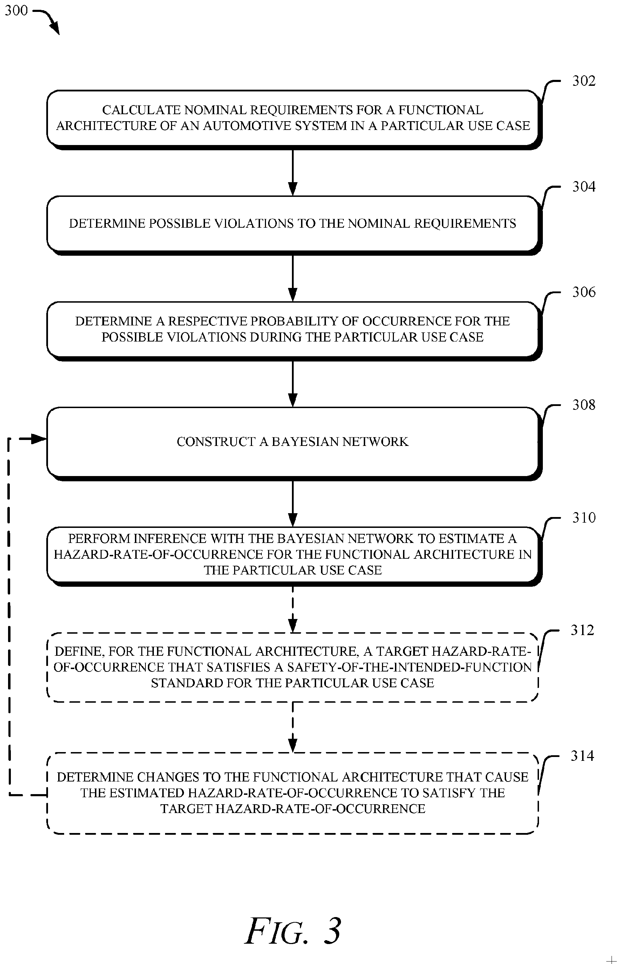

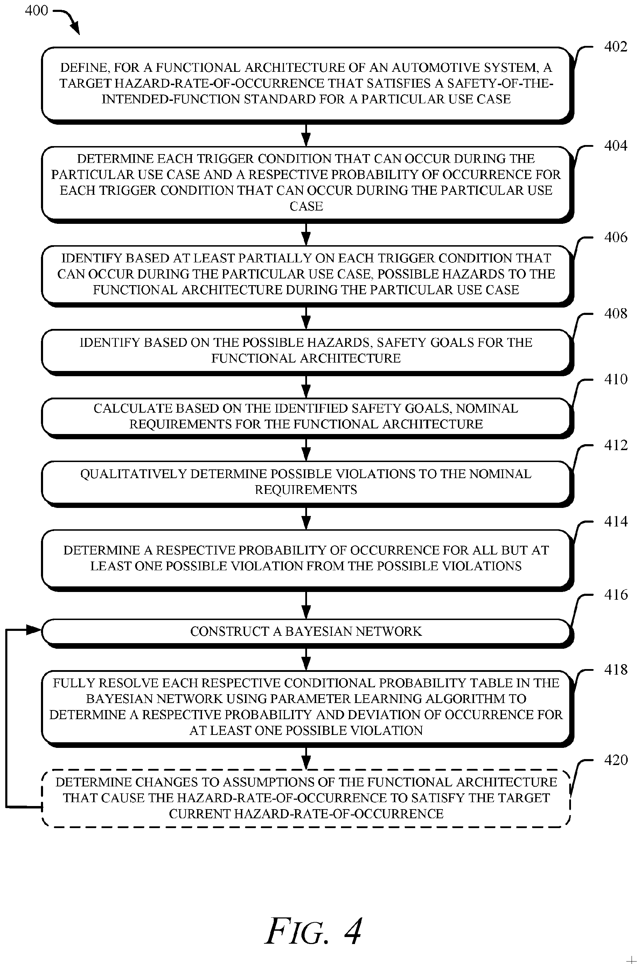

Fig. 3 illustrates an example method for inferring a hazard-rate-of-occurrence of the functional architecture of the automotive system in Fig. 1. Fig. 4 illustrates another example method for inferring the hazard-rate-of-occurrence of the functional architecture of the automotive system in Fig. 1. The methods 300 and 400 are each shown as a set of operations (or acts) performed in, but not limited to, the order or combinations in which the operations are shown or described. Further, any of the operations may be repeated, combined, or reorganized to provide other methods. In portions of the following discussion, reference may be made to the environment 100 of Fig. 1, and entities detailed in Figs. 1 and 2, reference to which is made for example only. The techniques are not limited to performance by one entity or multiple entities.

For meeting SOTIF requirements, a target hazard-rate-of-occurrence is determined (*e.g*., one occurrence per billions of distance or time units spent operating the vehicle 102). In Figs. 3 and 4, consider the following use case involving the vehicle 102 and the functional architecture 104: An automobile moves into a traffic lane between the vehicle 102 and another vehicle, which is stopped in the traffic lane just ahead. A hazard that the vehicle 102 wants to avoid is rear-ending the automobile. A likelihood of this hazard occurring is dependent on a probability of a braking system of the vehicle 102 stopping the vehicle 102 in time. For this use case, it can be assumed that the fusion module 108 needs to detect the two automobiles in-front of the vehicle 102, at a minimum range, which depends on closing speed to the nearest automobile. A probability that the braking system of the vehicle 102 fails to be activated in time depends on a probability that the lidar interface 106-1 or the camera interface 106-2 fails to detect an object or a probability that the lidar interface 106-1 or the camera interface 106-2 fails to determine an accurate range to the object, either of which can result in the hazard condition of rear-ending the automobile.

At 302, nominal requirements for a functional architecture of an automotive system in a particular use case are calculated. For example, detecting an object in time to stop the vehicle 102 is an example of a nominal requirement.

At 304, possible violations to the nominal requirements are determined. For example, the FMEA engine 210 may perform failure-mode event-analysis to investigate how assigned safety goals can be violated by the functional architecture 104 to determine a chain of possible violations or basic events. The FEMA engine 210 can provide a simulation or an analysis tool, a user interface, or a combination thereof, to investigate how algorithms of the functional architecture 104 perform. The FMEA engine 210 identifies probabilities of basic events occurring with respect to the nominal requirements (*e.g*. the FMEA engine 210 determines a false positive rate of the camera interface 106-2 at one hundred meters range in the rain). The FMEA engine 210 can be tuned via user input (*e.g.,* with expert knowledge), fault injection analysis, or virtual simulation. With the aid of the triggering condition catalog 220, occurrence rates or probabilities of these basic events can be determined. Examples of triggering conditions include any external condition that causes a vehicle system to deviate from its normal (ideal) behavior. For example, a sensor can fail to detect an object under some heavy rain conditions or concentrations of moisture. Similarly, when no object exists under some dry conditions, the sensor may falsely detect an object. Failing to detect the object represents a false negative, and falsely detecting the object is a false positive.

At 306, a respective probability of occurrence for the possible violations during the particular use case is determined. For example, determined by the SOTIF module 118-1 is a respective probability of occurrence for each triggering condition that can cause the possible violations, as well as a violation due to uncertainty in the functional architecture 104, for instance, in the absence of any triggering conditions. From the respective probability of occurrence for each triggering condition or uncertainty that can cause the possible violations, the SOTIF module 118-1 determines the respective probability of occurrence for the possible violations.

An important distinction over models built for FUSA includes the Bayesian networks 120-1 through 120-*n* being useful for modelling uncertainty in performance of the functional architecture 104, which is an additional benefit over fault-tree based analysis. The SOTIF data 122 may include a deviation in the probability or hazard-rate-of-occurrence when assumptions of the Bayesian networks 120-1 through 120-*n* are based on inaccurate data or data without a high confidence. In such a case, the SOTIF data 122 can report the hazard-rate-of-occurrence with a range in accuracy from a positive to a negative threshold, which is helpful in for designing a system. In other words, even if the target hazard-rate-of-occurrence cannot be achieved, knowing how close a system is to achieving the target based on a deviation amount relative to the hazard-rate-of-occurrence can be helpful in making design changes refinements to the functional architecture 104. Additionally, this deviation amount of this "range of accuracy" can guide a design strategy that adds a margin to the target hazard rate in order to account for calculation error caused by inaccurate data. This makes it possible to design a system to exceed the SOTIF target hazard rate with a calculated margin so that, even with inaccurate data in one or more conditional probability tables, it can still be verified that the final design will meet the original SOTIF target with quantifiable confidence (assuming the calculated SOTIF performance exceeds the original SOTIF target hazard rate by a margin exceeding the "range of accuracy". With the margin of error built-in, the system can be designed to be as safe as possible and exceed the target hazard rate. Even with a margin of possible error, it can be proven whether the SOTIF target hazard rate is proven to be achieved.

At 308, a Bayesian network is constructed. The Bayesian network 120 includes multiple nodes with one or more directed edges conveying information between two nodes, each of the multiple nodes corresponding to a different block of the functional architecture and having a conditional probability table derived from the respective probabilities of occurrence for the possible violations. Each node of the Bayesian network may correspond to a block of the functional architecture 104, while variables for each node will be basic events and corresponding probabilities, identified through FMEA.

Some violation events can be rare, and probabilities of occurrence may be unknown. Even without expert knowledge or simulation data, these unknowns can be determined using parameter learning algorithms. For example, at least one of the conditional probability tables in the Bayesian network is resolved using a parameter learning algorithm to determine a respective probability of occurrence for a particular possible violation of the possible violations with an unknown respective probability of occurrence. In this way, this process works with both partial and perfect data. Parameter learning algorithms, such as the Expectation-Maximization (EM) algorithm, can be used to perform maximum likelihood estimation to find unknown probability distributions in Bayesian networks in the case of partial data.

At 310, inference with the Bayesian network is performed to estimate a hazard-rate-of-occurrence for the functional architecture in the particular use case. For example, the Bayesian networks 120-1 through 120-*n* are executed in inference mode and generate the SOTIF data 122.

At 312, a target hazard-rate-of-occurrence that satisfies a safety-of-the-intended-function standard for the particular use case is defined for the functional architecture. For meeting SOTIF requirements, a target hazard-rate-of-occurrence is determined (*e.g*., one occurrence per billions of distance or time units spent operating the vehicle 102). As one example use case: An automobile cuts into a traffic lane between the vehicle 102 and another vehicle, which is stopped in the traffic lane just ahead. A hazard that the vehicle 102 wants to avoid is rear-ending the automobile. A likelihood of this hazard occurring is dependent on a probability of a braking system stopping the vehicle in time. And for this use case, it can be assumed that the fusion module 108 needs to detect the two automobiles in-front of the vehicle 102, at a minimum range, which depends on closing speed to the nearest automobile. A probability that the braking system is activated in time depends on a probability that the lidar interface 106-1 or the camera interface 106-2 fails to detect an object or a probability that the lidar interface 106-1 or the camera interface 106-2 fails to determine an accurate range to the object, either of which can result in the hazard condition of rear-ending the automobile.

At 314, changes to the functional architecture are determined that cause the estimated hazard-rate-of-occurrence to satisfy the target hazard-rate-of-occurrence. A target hazard-rate-of-occurrence may be defined for the functional architecture 104 that satisfies the SOTIF standard for the particular use case. Changes to assumptions about performance of the functional architecture 104 that cause an estimate of the hazard-rate-of-occurrence to satisfy the target hazard-rate-of-occurrence for the functional architecture can be determined. For example, to improve performance in rain or dust, the fusion module 108 may need to operate faster to process twice as much data as before to reduce a probability of failing to detect an object when particles (*e.g*., water or dust) interfere with a sensor. The Bayesian networks 120-1 through 120-n may be modified based on these changes to the performance requirements of the functional architecture 104. From re-running inference with the Bayesian network, the hazard-rate-of-occurrence for the functional architecture 104 can be re-estimated. For example, from 314, the process may return to 308 to modify the Bayesian network including the conditional probability table of the fusion module node so as to reflect the improvements made to the performance requirements. For example, if a current lidar detection rate at one hundred meters in rain is 80%, and the lidar can be improved to operate at 90% in the rain, the Bayesian network, once modified to account for this improvement, can quickly re-run inference to determine a quantifiable amount of improvement in system performance.

Using Bayesian networks configured for SOTIF analysis in this way, allows a target probability of failure and deviation in the probability of failure for the functional architecture 104 to be targeted by designing the functional architecture 104 to adhere to more-stringent assumptions with regard to violations and the violations' rate of occurrences. In other words, if a designer of the functional architecture 104 adjusts block level requirements or assumptions built into the Bayesian networks, the Bayesian networks can recompute and quantify any performance gain resulting from these changes, including by computing a deviation amount. This can be done automatically by running a script to plug in new values for conditional probability tables. Another approach can include using a parameter learning algorithms to estimate maximum failure probabilities that can be allowed for the functional architecture 104 to meet the SOTIF standard. The end result will be not one, but multiple sets of potential performance requirements that can meet the SOTIF standard. For example, our system may meet the SOTIF standard if in the presence of rain, the lidar has a 97% object detection rate and the camera has a 97% detection rate. However, it may also meet the SOTIF standard if the lidar has a 99% object detection rate and the camera has a 93% detection rate. As individual blocks of the functional architecture 104 improve through design, the Bayesian networks that model their performance are also modified to reflect updated conditional probability tables.

Because the SOTIF module 118 is configured to determine a hazard-rate-of-occurrence for multiple use cases, an overall hazard rate (or "total hazard rate") can be computed by summing each use case hazard rate by fraction of its hazard-rate-of-occurrence, relative to its exposure rate, or how often that use case occurs. In this way, the total system hazard rate can be quantitatively derived by summing a respective hazard-rate-of-occurrence computed for each use case in a plurality of use cases based in part on an exposure rate of that use case. This assumes that any unknown hazard rate is very small or negligible relative to "the known" overall hazard rate. Or in other words, there will also be some unknown hazard that cannot be accounted for, but for this uncertainty it is assumed that an "unknown hazard" rate of occurrence is extremely small relative to the hazard rate of occurrence for known violations. The SOTIF module 118 can quantify the known hazard rate and through an exhaustive process of identifying system weaknesses and triggering conditions quantify the unknown hazards into a small set. The SOTIF module 118 enables system-level verification of a functional architecture even before production or test. Tradeoffs can be made at the design stage between functional modules (*e.g*., improve one or more nodes probabilities to make some tradeoffs and improve a detection rate to cause the system to achieve the performance requirements) to achieve the SOTIF standard at production and during use. Specific modules that are the most detrimental to overall performance can be identified from this analysis and either improved or replaced. For example, whether heavy rain or light rain causes a hazard in a system, a location in the functional architecture 104 to address or mitigate the rain can be determined. Upon execution, the SOTIF module 118 can indicate in the SOTIF data 122 the most detrimental part or parts. For example, the SOTIF data 122 can enable identifying, from the Bayesian network 120, a part of the functional architecture 104 that is more detrimental to performance for the functional architecture 104 in the particular use case than other parts of the functional architecture 104. Design engineering resources can be deployed to improve parts (*e.g*., blocks, components, modules) of the functional architecture 104 that will result in the greatest overall improvement to the hazard-rate-of-occurrence of the functional architecture 104.

At 402, a target hazard-rate-of-occurrence is defined for a functional architecture of an automotive system. The target hazard-rate-of-occurrence satisfies a safety-of-the-intended-function standard for a particular use case. For example, the third vehicle 140 moves out from in-front of the vehicle 102 to reveal the stopped vehicle 130 ahead. At 404, each triggering condition that can occur during the particular use case and a respective probability of occurrence for each triggering condition that can occur during the particular use case is determined. For example, light rain with a 15% chance of occurring, heavy rain with a 10% chance of occurring, etc.

At 406, possible hazards to the functional architecture during the particular use case are identified based at least partially on each triggering condition that can occur during the particular use case. For example, a collision between the vehicle 102 and the stopped vehicle 130 is a high-severity hazard. Even in absence of triggering conditions, false positives, false negatives, and other hazards can still occur. Determining the possible hazards includes considering failure conditions that can happen even in absence of external triggering conditions.

At 408, based on the possible hazards, safety goals for the functional architecture are identified. For example, a safety goal may be to avoid collision with the stopped vehicle 130 but not perform extreme braking with the vehicle 102 and not veer out of the way of the stopped vehicle 130.

At 410, based on the safety goals, nominal requirements for the functional architecture are calculated. For example, facts of the scenario are considered to determine the nominal requirements. These facts may include: a vehicle braking profile, a vehicle speed, a time delay between detection of an object and starting a brake maneuver. These facts may result in a nominal requirement to detect the stopped vehicle 130 at a particular distance from the stopped vehicle 130.

At 412, based on the nominal requirements, possible violations to the nominal requirements are quantitatively determined. For example, due to rain, snow, water spray, or fog, detecting the stopped vehicle 130 could deviate from ideal performance by failing to detect the object, falsely detecting the object, or detecting the stopped vehicle 130 at an incorrect range.

At 414, a respective probability of occurrence for all but at least one possible violation from the possible violations is determined. For example, an engineering team in charge of developing the lidar interface 106-1 and testing its performance in the rain can provide a probability or estimate of the lidar interface 106-1 failing in the rain.

At 416, a Bayesian network is constructed. The Bayesian network includes multiple nodes with one or more directed edges conveying information between parent and child nodes. Each of the multiple nodes corresponds to a different block of the functional architecture and having a conditional probability table including the respective probabilities of occurrence for all but at least one possible violation from the possible violations. For example, the lidar interface 106-1 may be a node. Its parent triggering conditions may be rain, snow, and fog. The lidar interface 106-1 may have a child node belonging to the fusion module 108. The lidar interface 106-1 can have the variables: no detection, false positive or "ghost object," incorrect range measurement, and the probabilities of those variables occurring given "perfect" weather, rain, snow, and fog.

At 418, each respective conditional probability table in the Bayesian network is resolved using a parameter learning algorithm or other information based on expert judgment to determine a respective probability of occurrence and deviation in the respective probability of occurrence for at least one possible violation from the possible violations. For example, unable to simulate performance of the lidar interface 106-1 due to lack of snow conditions may result in having to estimate performance or perform an Expectation-Maximization analysis to estimate the unknown probability.

At 418, by resolving each of the conditional probability tables, inference can be performed with the Bayesian network to estimate a hazard-rate-of-occurrence for the functional architecture and corresponding deviation in the hazard-rate-of-occurrence. For example, the Bayesian network outputs a probability of a rear-end-collision occurring with the stopped vehicle 130 and a deviation in the probability of the rear-end-collision, such as a range of values between positive and negative amounts.

The estimated values may not be realistic; the SOTIF module 118-1 or a user may adjust probabilities determined by the parameter learning algorithm to be considered achievable, even if stretched, performance requirements. At 420, changes to the functional architecture are determined that cause the hazard-rate-of-occurrence to satisfy the target hazard-rate-of-occurrence. For example, it may be determined that performance of the functional architecture 104 can be improved by enabling the lidar or the camera to better perform in inclement weather. Various changes to assumptions of the functional architecture 104, which the Bayesian networks 120-1 through 120-*n*, adheres to, can be tried without having to test or wait for real-world road conditions. For example, an assumption can be made that the fusion module 108 performs better in inclement weather. These assumptions can be passed-down as more-restrictive requirements placed on the fusion module 108, the lidar interface 106-1 or the camera interface 106-2. This may require new software to be written that enables the fusion module 108 to achieve the narrower specifications. By running interference after making updates to the Bayesian networks 120-1 through 120-*n* having changed the underlying assumptions to reflect improvements to the fusion module 108, it can quickly and efficiently be determined whether the SOTIF standard is met.

### EXAMPLE TRIGGERING OCCURRENCES

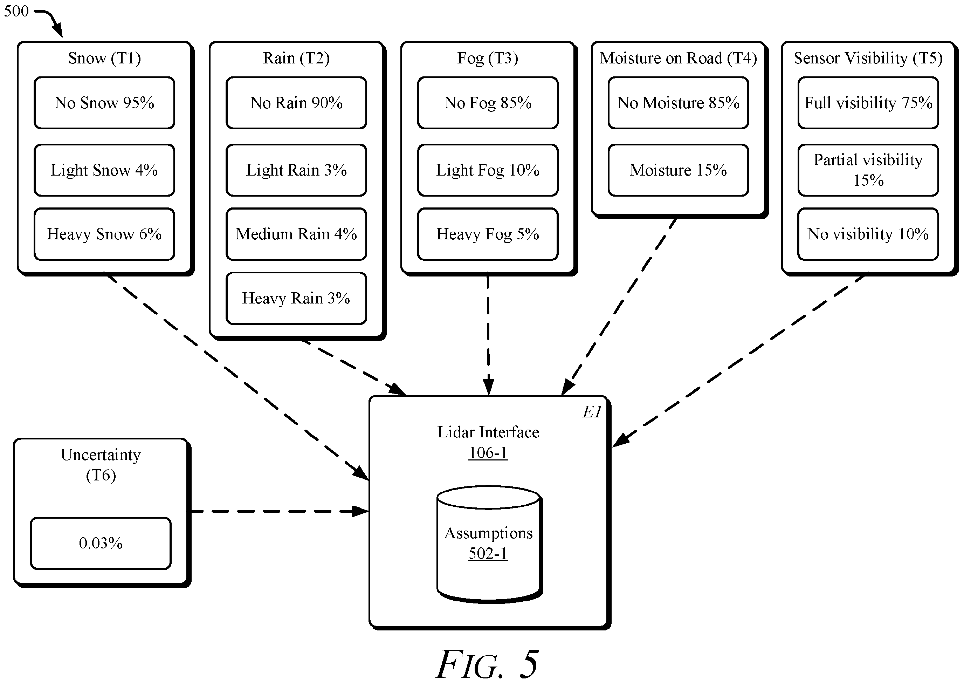

Fig. 5 illustrates various triggering conditions and their corresponding occurrence rates for the functional architecture of the automotive system in Fig. 1. The SOTIF module 118 may determine a respective probability of occurrence for each triggering condition T1 through T5 shown in Fig. 5. Each of the triggering conditions T1 through T5 is determined by the SOTIF module 118 to cause a possible violation. Examples of the triggering conditions T1 through T5 include road conditions, weather conditions, or vehicle conditions, such as vehicle direction and speed. As shown in Fig. 5, the triggering conditions that can cause the possible violations may be of variable intensity, and have a respective probability depending on intensity.

Also shown is uncertainty or "no triggering condition" T6 and its impact on the state of the lidar 106-1. Parent-node-failures and triggering conditions are not always the cause for a node in a functional architecture to fail. Even if a node has perfect input conditions from its parents nodes, and no triggering conditions T1 through T5 exist (*e.g*., perfect weather and lighting), the sensor fusion module 108 can still fail, if even only with a small possibility (*e.g.*, < 0.01%). Triggering conditions are typically main contributors of a false positive or a false negative, but not always and T6 depicts this.

Fig. 5 is only one way of illustrating the uncertainty or "no triggering condition" T6. In some examples, uncertainty is handled in a different way. For example, a conditional probability table can be modified to include this uncertainty. See Table 2, in the first row; despite good detections by both the lidar and camera interfaces 106-1 and 106-2, the fusion module 108-1 still has 0.1% uncertainty because the probability in this scenario less only 99.0%, which is than 100.00%. The lidar interface 106-1 is shown adhering to performance assumptions 502-1 including possible violations from a good detection state. The performance assumptions 502-1 (*e.g*., conditional probability tables, intra-nodal-dependencies) can be modified by the requirements engine 230 to determine whether improving the lidar interface 106-1 is likely to have any improvements to the overall hazard-rate-of-occurrence. In some cases, it may be better to modify another part of the functional architecture 104 instead and the requirements engine 230 can reconfigure the Bayesian networks 120-1 through 120-n to arrive at one or more configurations that satisfy the SOTIF standard.

### EXAMPLE BAYESIAN NETWORK ARCHITECTURE

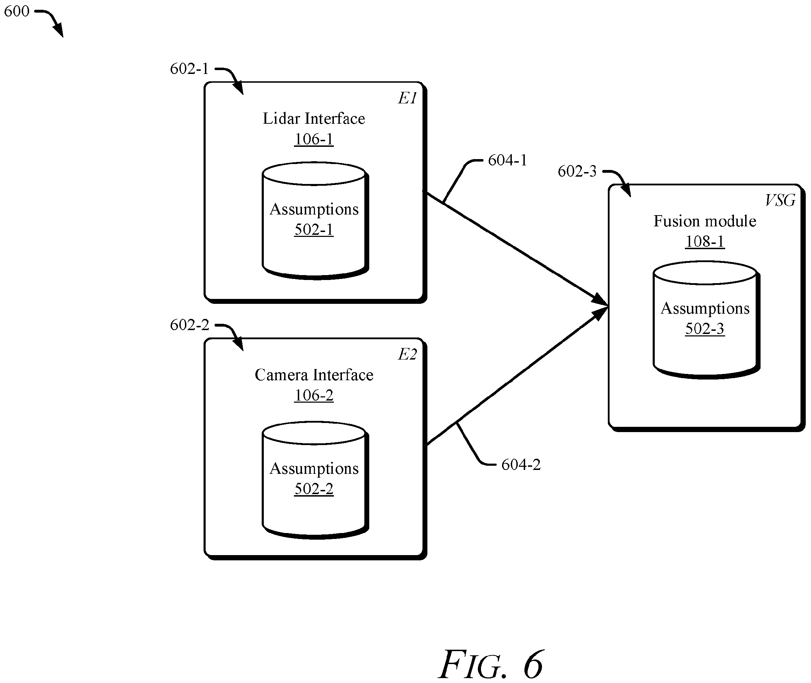

Fig. 6 illustrates part of an example Bayesian network constructed for the functional architecture of the automotive system in Fig. 1. Fig. 6 is described in the context of the Bayesian network 120-1 from Fig. 2, with only a part 600 of the Bayesian network 120-1 shown.

The Bayesian network 120-1 includes multiple nodes 602-1 through 602-3. Each of the nodes 602-1 and 602-2 feeds the node 602-3, which represents a VSG. The VSG associated with the fusion module 108-1 is conditionally dependent on the event E1 associated with the lidar interface 106-1 and the event E2 associated with the camera interface 106-2. A first directed edge 604-1 provides dependency information based on assumptions 502-1 (*e.g.,* a conditional probability table) of the node 602-1 for resolving assumptions 502-3 (*e.g.,* a conditional probability table) of the node 602-3. A second directed edge 604-2 provides dependency information based on assumptions 502-2 (*e.g.,* a conditional probability table) of the node 602-2, also for resolving the assumptions 502-3 of the node 602-3.

A Bayesian network such as the Bayesian network 120-1 enables analysis of a functional architecture under the SOTIF. The Bayesian network models performance of a functional architecture given triggering conditions that result in at least some possible hazards. Constructed based on estimated probability data or probability data collected, the Bayesian network quantifies uncertainty of the system performance using conditional probabilities representing causal relationships between modules or components of the functional architecture. This allows inference and other probabilistic algorithms to be performed by the Bayesian network to calculate an overall hazard-rate of the functional architecture as well as identifying weaknesses in the functional architecture. A hazard-rate-of-occurrence can be estimated for many different system configurations and use cases to prove whether SOTIF is achieved.

### ADDITIONAL EXAMPLES

In the following section, additional examples are provided.
Example 1. A method comprising: calculating nominal requirements for a functional architecture of an automotive system in a particular use case; determining possible violations to the nominal requirements; determining a respective probability of occurrence for the possible violations during the particular use case; constructing a Bayesian network including multiple nodes with one or more directed edges conveying information between two nodes, each of the multiple nodes having a conditional probability table derived from the respective probabilities of occurrence for the possible violations; and performing inference with the Bayesian network to estimate a hazard-rate-of-occurrence for the functional architecture in the particular use case.
Example 2. The method of any of the preceding examples, further comprising: resolving at least one conditional probability table in the Bayesian network using a parameter learning algorithm to determine a respective probability of occurrence and a respective deviation in the respective probability of occurrence for a particular possible violation of the possible violations with an unknown respective probability of occurrence.
Example 3. The method of any of the preceding examples, further comprising: determining a respective probability of occurrence for each triggering condition that can cause the possible violations; and determining, based on the respective probability of occurrence for each triggering condition that can cause the possible violations, the respective probability of occurrence for the possible violations.
Example 4. The method of any of the preceding examples, wherein each triggering condition that can cause the possible violations includes at least one of road conditions, weather conditions, vehicle conditions, or uncertainty in functional architecture.
Example 5. The method of any of the preceding examples, wherein the Bayesian network includes: a first node from the multiple nodes corresponding to a sensor fusion module of the functional architecture; a second node from the multiple nodes corresponding to an interface to a sensor of the functional architecture; and a first directed edge of the one or more directed edges provides dependency information based on a conditional probability table of the second node for resolving a conditional probability table of the first node.
Example 6. The method of any of the preceding examples, wherein the Bayesian network further includes: a third node from the multiple nodes corresponding to an interface to another sensor of the functional architecture; and a second directed edge of the one or more directed edges provides additional dependency information based on a conditional probability table of the third node for resolving the conditional probability table of the first node.
Example 7. The method of any of the preceding examples, further comprising: defining, for the functional architecture, a target hazard-rate-of-occurrence that satisfies a safety-of-the-intended-function standard for the particular use case; determining changes to assumptions of the functional architecture that cause an estimate of the hazard-rate-of-occurrence to satisfy the target hazard-rate-of-occurrence for the functional architecture; modifying the Bayesian network based on the changes to assumptions; and through inference with the Bayesian network, re-estimate the hazard-rate-of-occurrence for the functional architecture in the particular use case based on the changes to the assumptions.
Example 8. The method of any of the preceding examples, wherein the particular use case is a first use case in a plurality of use cases, the method further comprising: calculating respective nominal requirements for the functional architecture for each of the plurality of use cases; determining, possible violations to the respective nominal requirements for each of the plurality of use cases; determining a respective probability of occurrence and a respective deviation in the respective probability of occurrence for the possible violations during for each of the plurality of use cases; constructing, based on the respective probability of occurrence for the possible violations, a respective Bayesian network for each of the plurality of use cases; and performing inference with the respective Bayesian network for each of the plurality of use cases to estimate a hazard-rate-of-occurrence for the functional architecture in each of the plurality of use cases.
Example 9. The method of any of the preceding examples, further comprising: performing inference with the respective Bayesian network for each of the plurality of use cases to identify a portion of the functional architecture most likely to cause a particular hazard or most detrimental to the hazard-rate-of-occurrence.
Example 10. A system comprising a processor configured to: calculate, based on safety goals for a functional architecture of an automotive system, nominal requirements for the functional architecture given a particular use case; qualitatively determine possible violations to the nominal requirements; determine a respective probability of occurrence and a respective deviation in the respective probability of occurrence for at least some of the possible violations; construct a Bayesian network including multiple nodes with one or more directed edges, each node of the multiple nodes having a conditional probability table derived from the respective probabilities of occurrence and the respective deviations in the respective probabilities of occurrence determined for the at least some of the possible violations; resolve at least one conditional probability table in the Bayesian network by estimating any unknown probabilities in the conditional probability table; and performing inference with the Bayesian network to estimate a hazard-rate-of-occurrence for the functional architecture in the particular use case.
Example 11. The system of any of the preceding examples, wherein the processor is further configured to: identify, for the particular use case, possible hazards to the functional architecture; and determine, based on the possible hazards, the safety goals for the functional architecture of the automotive system.
Example 12. The system of any of the preceding examples, wherein the processor is further configured to: define, for the functional architecture, a target hazard-rate-of-occurrence that satisfies a safety-of-the-intended-function standard for the particular use case; and determining changes to assumptions of the functional architecture that cause an estimate of the hazard-rate-of-occurrence for the functional architecture to satisfy the target hazard-rate-of-occurrence for the functional architecture; modifying the Bayesian network based on the changes to the assumptions; and re-running inference with the Bayesian network to re-estimate the hazard-rate-of-occurrence for the functional architecture in the particular use case based on the changes to the assumptions.
Example 13. The system of any of the preceding examples, wherein the processor is configured to resolve at least one conditional probability table in the Bayesian network by estimating any unknown probabilities in the conditional probability table using a parameter learning algorithm.
Example 14. The system of any of the preceding examples, wherein the automotive system comprises hardware of a vehicle including inherent uncertainty or weakness, and the functional architecture includes a software module configured to execute on the hardware of the vehicle.
Example 15. The system of any of the preceding examples, wherein the processor is further configured to determine the respective probability of occurrence for the at least some of the possible violations by: determining a respective probability of occurrence for each triggering condition that can cause the at least some of the possible violations; and determining, based on the respective probability of occurrence for each triggering condition that can cause the at least some of the possible violations, the respective probability of occurrence for the at least some of the possible violations.
Example 16. The system of any of the preceding examples, wherein each triggering condition that can cause the possible violations includes at least one of: road conditions, weather conditions, vehicle conditions, or uncertainty in functional architecture.
Example 17. The system of any of the preceding examples, wherein the processor is further configured to identify from the Bayesian network a part of the functional architecture that is more detrimental to performance for the functional architecture in the particular use case.
Example 18. The system of any of the preceding examples, wherein the Bayesian network includes: a first node from the multiple nodes corresponding to a sensor fusion module of the functional architecture; a second node from the multiple nodes corresponding to an interface to a sensor of the functional architecture; and a first directed edge of the one or more directed edges provides dependency information based on a conditional probability table of the second node for resolving a conditional probability table of the first node.
Example 19. The system of any of the preceding examples, wherein the Bayesian network further includes: a third node from the multiple nodes corresponding to an interface to another sensor of the functional architecture; and a second directed edge of the one or more directed edges provides additional dependency information based on a conditional probability table of the third node for resolving the conditional probability table of the first node.
Example 20. A system comprising: means for defining, for a functional architecture of an automotive system, a target hazard-rate-of-occurrence that satisfies a safety-of-the-intended-function standard for a particular use case; means for determining each triggering condition that can occur during the particular use case and a respective probability of occurrence for each triggering condition that can occur during the particular use case; means for identifying, based on each triggering condition that can occur during the particular use case, possible hazards to the functional architecture during the particular use case; means for identifying, based on the possible hazards, safety goals for the functional architecture; means for calculating based on the safety goals, nominal requirements for the functional architecture; means for qualitatively-determining possible violations to the nominal requirements; means for determining a respective probability of occurrence for all but at least one possible violation from the possible violations; means for constructing a Bayesian network including multiple nodes with one or more directed edges conveying information between parent and child nodes, each of the multiple nodes having a conditional probability table including the respective probabilities of occurrence for all but at least one possible violation from the possible violations; means for resolving each respective conditional probability table in the Bayesian network using a parameter learning algorithm to determine a respective probability of occurrence for at least one possible violation from the possible violations; means for performing inference with the Bayesian network to estimate a hazard-rate-of-occurrence and deviation in the hazard-rate-of-occurrence for the functional architecture; and means for determining changes to the functional architecture that cause the hazard-rate-of-occurrence and the deviation in the hazard-rate-of-occurrence to satisfy the target hazard-rate-of-occurrence.
Example 21. The system of any of the preceding examples, further comprising: means for performing inference with the Bayesian network to identify a portion of the functional architecture most likely to cause a particular hazard or most detrimental to the hazard-rate-of-occurrence.
Example 22. The system of any of the preceding examples, further comprising: means for quantitatively deriving a total system hazard rate by summing a respective hazard-rate-of-occurrence computed for each use case in a plurality of use cases based in part on an exposure rate of that use case.
Example 23. The system of any of the preceding examples, further comprising: means for incorporating uncertainty into the Bayesian network; and means for reporting the hazard-rate-of-occurrence with a range for upper and lower bounds determined based on the uncertainty.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation, unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (*e.g*., a-a, a-a-a, a-a-b, a-a-c, a-b-b, a-c-c, b-b, b-b-b, b-b-c, c-c, and c-c-c or any other ordering of a, b, and c).

## Claims

1. A method comprising:
calculating nominal requirements for a functional architecture of an automotive system in a particular use case;
determining possible violations to the nominal requirements;
determining a respective probability of occurrence for the possible violations during the particular use case;
constructing a Bayesian network including multiple nodes with one or more directed edges conveying information between two nodes, each of the multiple nodes having a conditional probability derived from the respective probabilities of occurrence for the possible violations; and
performing inference with the Bayesian network to estimate a hazard-rate-of-occurrence for the functional architecture in the particular use case.

2. The method of claim 1, further comprising:
resolving at least one conditional probability in the Bayesian network using a parameter learning algorithm to determine a respective probability of occurrence for a particular possible violation of the possible violations with an unknown respective probability of occurrence.

3. The method of any preceding claim, further comprising:
determining a respective probability of occurrence for each triggering condition that can cause the possible violations; and
determining, based on the respective probability of occurrence for each triggering condition that can cause the possible violations, the respective probability of occurrence for the possible violations.

4. The method of claim 3, wherein each triggering condition that can cause the possible violations includes at least one of road conditions, weather conditions, vehicle conditions, or uncertainty in functional architecture.

5. The method of any preceding claim, wherein the Bayesian network includes:
a first node from the multiple nodes corresponding to a sensor fusion module of the functional architecture;
a second node from the multiple nodes corresponding to an interface to a sensor of the functional architecture; and
a first directed edge of the one or more directed edges provides dependency information based on a conditional probability table of the second node for resolving a conditional probability table of the first node.

6. The method of claim 5, wherein the Bayesian network further includes:
a third node from the multiple nodes corresponding to an interface to another sensor of the functional architecture; and
a second directed edge of the one or more directed edges provides additional dependency information based on a conditional probability table of the third node for resolving the conditional probability table of the first node.

7. The method of claim 5 or 6, further comprising:
resolving the conditional probability table by estimating any unknown probabilities in the conditional probability table using a parameter learning algorithm.

8. The method of any preceding claim, further comprising:
defining, for the functional architecture, a target hazard-rate-of-occurrence that satisfies a safety-of-the-intended-function standard for the particular use case;
determining changes to assumptions of the functional architecture that cause an estimate of the hazard-rate-of-occurrence to satisfy the target hazard-rate-of-occurrence for the functional architecture; modifying the Bayesian network based on the changes to assumptions; and
through inference with the Bayesian network, re-estimate the hazard-rate-of-occurrence for the functional architecture in the particular use case based on the changes to the assumptions.

9. The method of any preceding claim, wherein the particular use case is a first use case in a plurality of use cases, the method further comprising:
calculating respective nominal requirements for the functional architecture for each of the plurality of use cases;
determining, possible violations to the respective nominal requirements for each of the plurality of use cases;
determining a respective probability of occurrence for the possible violations during for each of the plurality of use cases;
constructing, based on the respective probability of occurrence for the possible violations, a respective Bayesian network for each of the plurality of use cases; and
performing inference with the respective Bayesian network for each of the plurality of use cases to estimate a hazard-rate-of-occurrence for the functional architecture in each of the plurality of use cases to identify a portion of the functional architecture most likely to cause a particular hazard or most detrimental to the hazard-rate-of-occurrence.

10. The method of any preceding claim, further comprising:
identify, for the particular use case, possible hazards to the functional architecture; and
determine, based on the possible hazards, safety goals for the functional architecture of the automotive system.

11. The method of any preceding claim, further comprising:
quantitatively deriving a total system hazard rate by summing a respective hazard-rate-of-occurrence computed for each use case in a plurality of use cases based in part on an exposure rate of that use case.

12. The method of any preceding claim, further comprising:
incorporating uncertainty into the Bayesian network; and
reporting the hazard-rate-of-occurrence with a range for upper and lower bounds determined based on the uncertainty.

13. The method of any preceding claim, wherein the automotive system comprises hardware of a vehicle including inherent uncertainty or weakness, and the functional architecture includes a software module configured to execute on the hardware of the vehicle.

14. A system comprising a processor configured to perform any of the methods of the preceding claims.

15. A system comprising means for performing any of the methods of the preceding claims.
